# EUROPEAN PATENT APPLICATION

(11) **EP 4 807 315 A1**
(43) Date of publication of application: **16.09.2026**
(21) Application number: 26164817.4
(22) Date of filing: 13.03.2026
(51) Int. Cl.: G01B 11/14, F01D 21/00, G01B 15/00, F01D 17/02

(54) **MULTIPLEXED MICROWAVE BLADE SENSING SYSTEM**

(30) Priority: 14.03.2025 US 202519080707
(71) Applicant: RTX Corporation, Farmington, CT 06032 (US)
(72) Inventor: GOK, Gurkan, Milford, 06461 (US); ZACCHIO, Joseph, Wethersfield, 06109 (US); MANTESE, Joseph V., Ellington, 06029 (US)
(74) Representative: Dehns

(57) **Abstract**

An apparatus (100; 200; 300; 404) includes a waveguide (104; 204; 304), and at least one transceiver (102; 204; 302; 406) configured to transmit and receive signals via the waveguide (104; 204; 304). The apparatus (100...404) also includes a plurality of sensor interrogation points (106; 206; 306). Each sensor interrogation point (106; 206; 306) of the plurality of sensor interrogation points (106; 206; 306) is configured to receive, via the waveguide (104; 204; 304), an interrogation signal (210; 201; 310) from the at least one transceiver (102...406), and radiate the interrogation signal (210; 201; 310) toward a target to perform at least one measurement. Each sensor interrogation point (106; 206; 306) of the plurality of sensor interrogation points (106; 206; 306) is also configured to receive a return signal (212, 214, 216; 312, 314, 316) reflected from the target corresponding with the at least one measurement, and redirect the return signal (212...316) into the waveguide (104; 204; 304) for reception by the at least one transceiver (102...406) via the waveguide (104; 204; 304).

## Description

### TECHNICAL FIELD

This disclosure generally relates to sensing and measurement. More specifically, this disclosure relates to multiplexed microwave blade sensing systems.

### BACKGROUND

Monitoring rotating blade parameters including tip clearance and tip timing is important in many applications, including aerospace and ground turbines. The ability to continuously monitor these parameters is useful for engine health monitoring systems and active clearance systems. Integration of sensors into turbines can pose assembly/size, weight, power and cost (SWAP-C) challenges which can limit the number of sensors that are integrated. As a result, blade sensors are often confined to the lab development stage rather than being deployed in operational systems, such as aerospace engines in flight. Practical systems, if they include sensors at all, typically incorporate a limited number. This results in collecting less information, which may prevent proper loop closure in systems utilizing dynamic responses.

### SUMMARY

This disclosure relates to multiplexed microwave blade sensing systems.

In an aspect of the present invention, an apparatus may include a waveguide, and at least one transceiver configured to transmit and receive signals via the waveguide. The apparatus may also include a plurality of sensor interrogation points. Each sensor interrogation point of the plurality of sensor interrogation points may be configured to receive, via the waveguide, an interrogation signal from the at least one transceiver, and radiate the interrogation signal toward a target to perform at least one measurement. Each sensor interrogation point of the plurality of sensor interrogation points may also be configured to receive a return signal reflected from the target corresponding with the at least one measurement, and redirect the return signal into the waveguide for reception by the at least one transceiver via the waveguide.

Any single one or any combination of the following features may be used with the above examples. The apparatus is configured for integration within a gas turbine engine. The target may be a fan blade of the gas turbine engine. The at least one measurement may be at least one of a blade tip time and a blade tip clearance. The transceiver may be configured to transmit the interrogation signal as part of a waveform comprising a plurality of interrogation signals, each interrogation signal transmitted on a unique frequency corresponding with one sensor interrogation point of the plurality of sensor interrogation points. Each sensor interrogation point of the plurality of sensor interrogation points may be configured to receive an interrogation signal of the plurality of interrogation signals transmitted on the unique frequency associated with the sensor. The transceiver may be configured to associate the return signal redirected from a sensor interrogation point of the plurality of sensor interrogation points with that sensor interrogation point based on a receive frequency of the return signal. Each sensor interrogation point of the plurality of sensor interrogation points may be configured to receive the interrogation signal from the at least one transceiver via an identical frequency at different times. The transceiver may be configured to receive the return signal redirected from each sensor interrogation point of the plurality of sensor interrogation points at other different times. The transceiver may be configured to associate the return signal redirected from a sensor interrogation point of the plurality of sensor interrogation points with that sensor interrogation point based on an arrival time of the return signal with respect to a transmission time of the interrogation signal. The apparatus may include a waveguide termination coupled to an end of the waveguide. The waveguide termination may be configured to terminate the waveguide to prevent any end of waveguide reflection. The waveguide termination may be configured to provide an apparatus monitoring capability. The waveguide may include at least one radio frequency (RF) point. The transceiver may be configured to associate the return signal redirected from a sensor interrogation point of the plurality of sensor interrogation points with that sensor interrogation point based on an arrival time of the return signal at the transceiver with respect to a departure time of the return signal from the at least one RF reference point.

In another aspect of the present invention, a method may include transmitting, by at least one transceiver via a waveguide, at least one interrogation signal toward a plurality of sensor interrogation points. The method may also include, for each sensor interrogation point of the plurality of sensor interrogation points, receiving, via the waveguide, at least one of the at least one interrogation signal, and radiating the received signal toward a target to perform at least one measurement. The method may also include, for each sensor interrogation point of the plurality of sensor interrogation points, receiving a return signal reflected from the target corresponding with the at least one measurement, and redirecting the return signal into the waveguide. The method may also include receiving, by the at least one transceiver via the waveguide, the return signal redirected from each sensor interrogation point of the plurality of sensor interrogation points.

Any single one or any combination of the following features may be used with the above examples. The target may be a fan blade of a gas turbine engine. The at least one measurement may be at least one of a blade time tip and a blade tip clearance. The at least one interrogation signal may be transmitted as part of a waveform comprising a plurality of interrogation signals, each interrogation signal transmitted on a unique frequency associated with one sensor interrogation point of the plurality of sensor interrogation points. Each sensor interrogation point of the plurality of sensor interrogation points may receive an interrogation signal of the plurality of interrogation signals transmitted on the unique frequency associated with the sensor. The method may further include associating the return signal redirected from a sensor interrogation point of the plurality of sensor interrogation points with that sensor interrogation point based on a receive frequency of the return signal. Each sensor interrogation point of the plurality of sensor interrogation points may receive the at least one interrogation signal from the at least one transceiver via an identical frequency at different times. The transceiver may receive the return signal redirected from each sensor interrogation point of the plurality of sensor interrogation points at other different times. The method may further include associating the return signal redirected from a sensor interrogation point of the plurality of sensor interrogation points with that sensor interrogation point based on an arrival time of the return signal with respect to a transmission time of the at least one interrogation signal.

In another aspect of the present invention, a system may include at least one transceiver coupled to a waveguide; a plurality of sensor interrogation points, each sensor interrogation point coupled to a separate location on the waveguide; and a controller operatively coupled to the at least one transceiver. The controller may be configured to cause the at least one transceiver to transmit at least one interrogation signal to perform at least one measurement, and receive, from the transceiver, data associated with the measurement. To perform the measurement, each sensor interrogation point of the plurality of sensor interrogation points may be configured to receive, via the waveguide, at least one of the at least one interrogation signal, and radiate the received signal toward a target to perform the at least one measurement. To perform the measurement, each sensor interrogation point of the plurality of sensor interrogation points may be also configured to receive a return signal reflected from the target corresponding with the at least one measurement, and redirect the return signal into the waveguide for reception by the at least one transceiver via the waveguide.

Any single one or any combination of the following features may be used with the above examples. At least a portion of the system may be configured for integration within a gas turbine engine. The target may be a fan blade of the gas turbine engine. The at least one measurement may be at least one of a blade tip time and a blade tip clearance. The transceiver may be configured to transmit the at least one interrogation signal as part of a waveform comprising a plurality of interrogations signals, each interrogation signal transmitted on a unique frequency associated with one sensor interrogation point of the plurality of sensor interrogation points. Each sensor interrogation point of the plurality of sensor interrogation points may be configured to receive an interrogation signal of the plurality of interrogation signals transmitted on the unique frequency associated with the sensor. The transceiver may be configured to associate the return signal redirected from a sensor interrogation point of the plurality of sensor interrogation points with that sensor interrogation point based on a receive frequency of the return signal. Each sensor interrogation point of the plurality of sensor interrogation points may be configured to receive the at least one interrogation signal from the at least one transceiver via an identical frequency at different times. The transceiver may be configured to receive the return signal redirected from each sensor interrogation point of the plurality of sensor interrogation points at other different times. The transceiver may be configured to associate the return signal redirected from a sensor interrogation point of the plurality of sensor interrogation points with that sensor interrogation point based on an arrival time of the return signal with respect to a transmission time of the at least one interrogation signal. The system may include a waveguide termination coupled to an end of the waveguide. The waveguide termination may be configured to terminate the waveguide to prevent any end of waveguide reflection. The waveguide termination may be configured to provide a system monitoring capability to the controller. The waveguide may include at least one radio frequency (RF) point. The transceiver may be configured to associate the return signal redirected from a sensor interrogation point of the plurality of sensor interrogation points with that sensor interrogation point based on an arrival time of the return signal at the transceiver with respect to a departure time of the return signal from the at least one RF reference point.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURE 1 illustrates an example microwave sensing apparatus in accordance with this disclosure;
FIGURE 2 illustrates an example of frequency-based multiplexing for a microwave sensing apparatus in accordance with this disclosure;
FIGURE 3 illustrates an example of time-based multiplexing for a microwave sensing apparatus 300 in accordance with this disclosure;
FIGURE 4 illustrates an example microwave sensing system in accordance with this disclosure; and
FIGURE 5 illustrates an example method for operating a microwave sensing apparatus in accordance with this disclosure.

### DETAILED DESCRIPTION

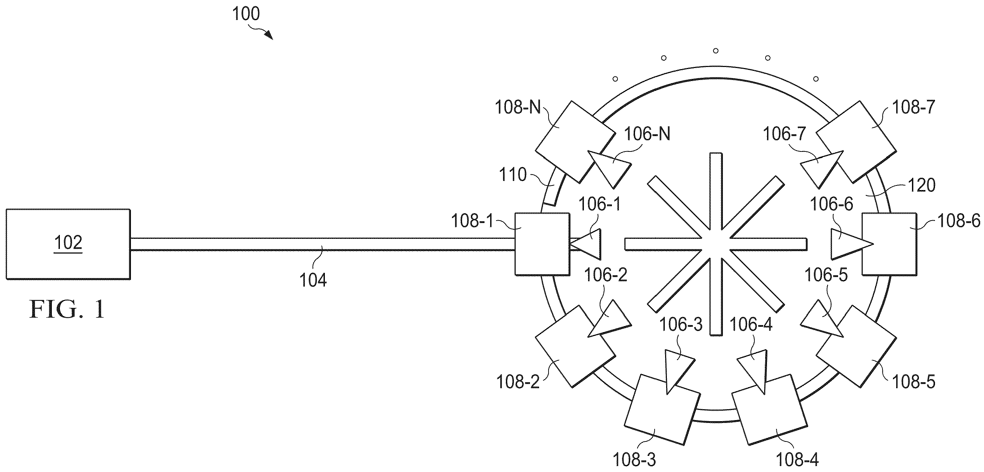

FIGURES 1 through 5, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As noted above, monitoring rotating blade parameters including tip clearance and tip timing is important in many applications, including aerospace and ground turbines. The ability to continuously monitor these parameters is useful for engine health monitoring systems and active clearance systems. Integration of sensors into turbines can pose assembly/size, weight, power and cost (SWAP-C) challenges which can limit the number of sensors that are integrated. As a result, blade sensors are often confined to the lab development stage rather than being deployed in operational systems, such as aerospace engines in flight. Practical systems, if they include sensors at all, typically incorporate a limited number. This results in collecting less information, which may cause under sampling, and may induce aliasing in the data.

Blade sensors may be used to perform life monitoring of components, assessing material and mechanical behavior to estimate system reliability, to perform condition-based maintenance and determine time to failure of the units in their actual operating conditions. Vibration monitoring can be exploited for blade tip timing to measure blade vibration amplitude and tip clearance to detect any deterioration taking place in the condition of turbine blades. A blade vibration monitoring system can assist with early detection of abnormal blade vibration behavior. In conjunction with a health monitoring system, the vibration characteristics can be analyzed to support a pro-active maintenance and inspection schedule. Active clearance control systems_closely monitor and control the distance between the blade of the tip and engine frame. Tip timing variations can be used for detailed engine diagnostics such as nozzle misfire, clogging, component misalignment/wear/end-of-life, and similar.

Various embodiments of the present disclosure provide systems and methods for multiplexed microwave blade sensing. Compared to other approaches including capacitive, magnetic, optical, etc., microwave sensors for blade sensing systems can provide potential benefits such as (1) similar or better accuracy of tip timing detection, (2) elimination of wires in/out, (3) elimination of demagnetization processes, (4) radial displacement within limits to enable options for crack detection, (5) higher temperature range operations, (6) multiplexed sensor networks using minimum amounts of transceivers, (7) adaptability with wear or other changes to sub-component structure, etc. Multiplexing allows for using a single transmit (Tx)/receive (Rx) pair to interrogate multiple points on time scales quickly compared to mechanical systems. Moreover, self-referencing permits the ability to remove variation due to vibration and temperature.

FIGURE 1 illustrates an example microwave sensing apparatus 100 in accordance with this disclosure. In the example of FIGURE 1, microwave sensing apparatus 100 is configured to monitor the blades of a gas turbine engine 120. However, it should be understood that microwave sensing apparatus 100 is not limited to blade monitoring applications, and that apparatus 100 may be configured for other application such as brake position monitoring, multidimensional flame monitoring of jet nozzles, etc.

Microwave sensing apparatus 100 includes a transceiver unit 102. Transceiver unit 102 includes radio frequency (RF) and baseband circuitry that can send and receive microwave signals to (such as an interrogation signal) and from (such as a return signal) a plurality of sensor interrogation points 106-1 through 106-N to measure the reflectivity off of a blade at multiple frequencies. In some embodiments, transceiver unit 102 may transmit a waveform that comprises frequencies of interest and captures and analyzes the reflectivity at all frequencies simultaneously. In some embodiments, transceiver unit 102 may transmit a frequency sweep/chirp to capture reflectivities from each sensor interrogation point sequentially. The sweep/chirp time can be optimized based on the system parameters including blade rotation speed, number of blades, number of samples, etc.

Sensor interrogation points 106-1 through 106-N include a radiative opening with a field pattern on the aperture (e.g., a spot beam shape), that may be tailored for the blade structure to maximize feature capture and return signal capture. In some embodiments, Sensors 106-1 through 106-N may incorporate dual polarization to capture polarization imaging (proportional to the contrast in blade size in two orthogonal dimensions).

A waveguide 104 is used to confine the microwave signals. In some embodiments, waveguide 104 may be a hollow microwave metallic waveguide, but it should be understood that waveguide 104 may be of any type or shape, including coax, dielectric, or other similar variation.

Sensor interrogation points 106-1 through 106-N are coupled to waveguide 104 via one of a respective structure 108-1 through 108-N. Each of structures 108-1 through 108-N may be a multiplexer or an equivalent structure such as a coupler or T-junction with a resonant tank. In some embodiments, any of structures 108-1 through 108-N may be a simple mechanical connection such as a mechanical butt joint. Structures 108-1 through 108-N are used along the path of waveguide 104 to direct the microwave signals based on the frequency sent from transceiver unit 102 to an assigned sensor interrogation point among sensor interrogation points 106-1 through 106-N, as well as redirect the reflected signals captured by sensor interrogation points 106-1 through 106-N back to transceiver unit 102. In some embodiments, any of structures 108-1 through 108-N may function as, include, or be replaced by a radio frequency (RF) reference point to facilitate a frequency or timing location within waveguide 104. For example, one or more RF reference points may be used to locate which sensor interrogation point is being interrogated and also to account for variations in the length of waveguide 104 due to thermal expansion or other mechanical factors.

In some embodiments, microwave sensing apparatus 100 may include a waveguide termination 110 at the end of waveguide 104. In some embodiments, waveguide termination 110 may be configured to prevent any end of waveguide reflection. In some embodiments, waveguide termination 110 may be used to monitor (e.g., by an external component or device such as a controller) the health of the waveguide system by analyzing the signal content reaching to the end of the waveguide structure. In some embodiments, waveguide termination 110 may be configured as an RF reference point similar as described above regarding structures 108-1 through 108-N. For example, waveguide termination 110 may be configured as a semi-transmissive RF window for reference. In embodiments where waveguide termination 110 is configured as RF reference point, waveguide termination may be used for calibration of microwave sensing apparatus 100. For example, microwave sensing apparatus 100 may determine a round trip time of a signal transmitted by transceiver unit 102 and reflected back to transceiver unit 102 by waveguide termination 110 to determine a length of waveguide 104.

Although FIGURE 1 illustrates an example microwave sensing apparatus 100, various changes could be made to FIGURE 1. For example, while microwave sensing apparatus 100 is depicted as having a particular size and shape, microwave sensing apparatus 100 may be of any size or shape. Similarly, while microwave sensing apparatus 100 is depicted as including a single transceiver unit 102 and a plurality of sensor interrogation points 106-1 through 106-N, microwave sensing apparatus 100 may include any number of transceiver units and sensor interrogation points.

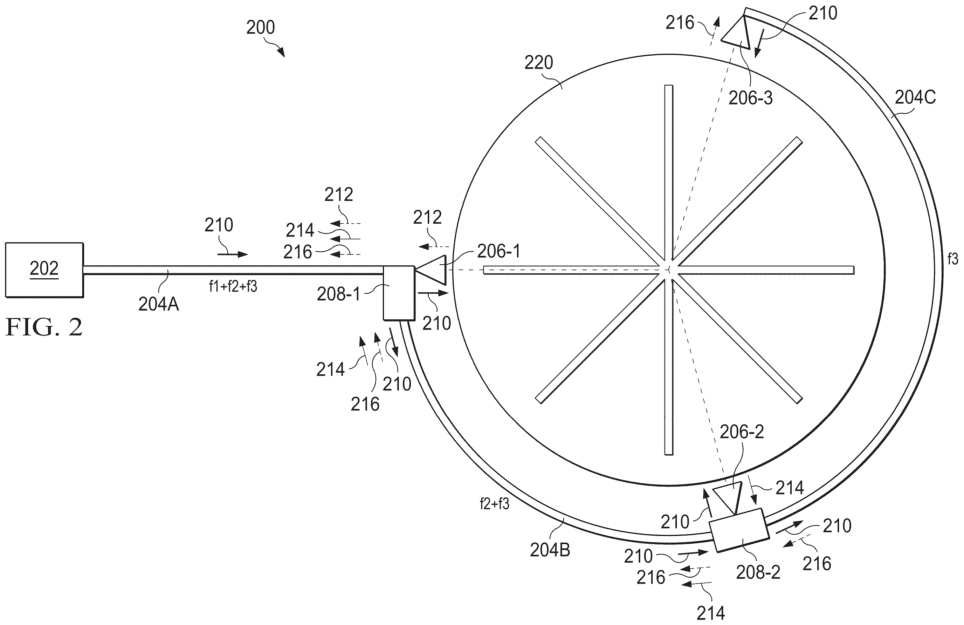

FIGURE 2 illustrates an example of frequency-based multiplexing for a microwave sensing apparatus 200 in accordance with this disclosure. In the example of FIGURE 2, microwave sensing apparatus 200 is substantially similar to microwave sensing apparatus 100 of FIGURE 1. However, for ease of explanation, microwave sensing apparatus 200 only includes three sensor interrogation points 206-1 through 206-3. It should be understood that microwave sensing apparatus 200 is not limited to the three sensor interrogation points 206-1 through 206-3, and that microwave sensing apparatus 200 may include additional sensor interrogation points or fewer sensor interrogation points. In the example of FIGURE 2, microwave sensing apparatus 200 is configured to monitor the blades of a gas turbine engine 220. However, it should be understood that microwave sensing apparatus 200 is not limited to blade monitoring applications, and that microwave sensing apparatus 200 may be configured for other application such as brake position monitoring, multidimensional flame monitoring of jet nozzles, etc.

To perform a measurement, transceiver unit 204 transmits an interrogation signal 210 that includes three "tones" at different frequencies f1, f2, and f3 through waveguide portion 204A which reaches structure 208-1. Structure 208-1 operates as a diplexer that isolates frequency f1 from frequencies f2 and f3, while sensor interrogation point 206-1 emits the interrogation signal 210 at frequency f1 to capture a return signal (or absence of a return signal) 212 from a blade of gas turbine engine 220. Return signal 212 remains at the same frequency f1 and travels back to transceiver unit 204 via waveguide portion 204A without leaking into other waveguide portions and sensor interrogation points that encircle the rim of gas turbine engine 220. In some embodiments, structure 208-1 may function as, include, or be replaced by an RF reference point configured to facilitate the frequency location within waveguide 204 associated with the location of sensor interrogation point 206-1.

After transmission of interrogation signal 210 exits structure 208-1 into waveguide portion 204B, interrogation signal 201 only includes frequencies f2 and f3 as frequency f1 has been filtered by structure 208-1. After traveling through waveguide portion 204B, interrogation signal 210 reaches structure 208-2. Structure 208-2 operates as a diplexer that isolates frequency f2 from frequency f3, while sensor interrogation point 206-2 emits the interrogation signal 210 at frequency f2 to capture a return signal (or absence of a return signal) 214 from a blade of gas turbine engine 220. Return signal 214 remains at the same frequency f2 and travels back to transceiver unit 204 via waveguide portions 204A and 204B without leaking into other waveguide portions and sensor interrogation points that encircle the rim of gas turbine engine 220. In some embodiments, structure 208-2 may function as, include, or be replaced by an RF reference point configured to facilitate the frequency location within waveguide 204 associated with the location of sensor interrogation point 206-2.

After transmission of interrogation signal 210 exits structure 208-2 into waveguide portion 204C, interrogation signal 201 only includes frequency f3, as frequency f2 has been filtered by structure 208-2. After traveling through waveguide portion 204C, interrogation signal 210 reaches sensor interrogation point 206-3 which emits the interrogation signal 210 at frequency f3 to capture a return signal (or absence of a return signal) 216 from a blade of gas turbine engine 220. Return signal 216 remains at the same frequency f3 and travels back to transceiver unit 204 via waveguide portions 204A, 204B, and 204C without leaking into other waveguide portions and sensor interrogation points that encircle the rim of gas turbine engine 220. In some embodiments, structure 208-3 may function as, include, or be replaced by an RF reference point configured to facilitate the frequency location within waveguide 204 associated with the location of sensor interrogation point 206-3.

Because return signal 212 is received at frequency f1, transceiver unit 204 is able to associate return signal 212 with sensor interrogation point 206-1. Similarly, because return signal 214 is received at frequency f2, transceiver unit 204 is able to associate return signal 214 with sensor interrogation point 206-2. Likewise, because return signal 216 is received at frequency f3, transceiver unit 204 is able to associate return signal 216 with sensor interrogation point 206-3.

Although FIGURE 2 illustrates an example of frequency-based multiplexing for a microwave sensing apparatus 200, various changes could be made to FIGURE 2. For example, while microwave sensing apparatus 200 is depicted as having a particular size and shape, microwave sensing apparatus 200 may be of any size or shape. Similarly, while microwave sensing apparatus 200 is depicted as including a single transceiver unit 204 and a plurality of sensor interrogation points 206-1 through 206-3, microwave sensing apparatus 300 may include any number of transceiver units and sensor interrogation points.

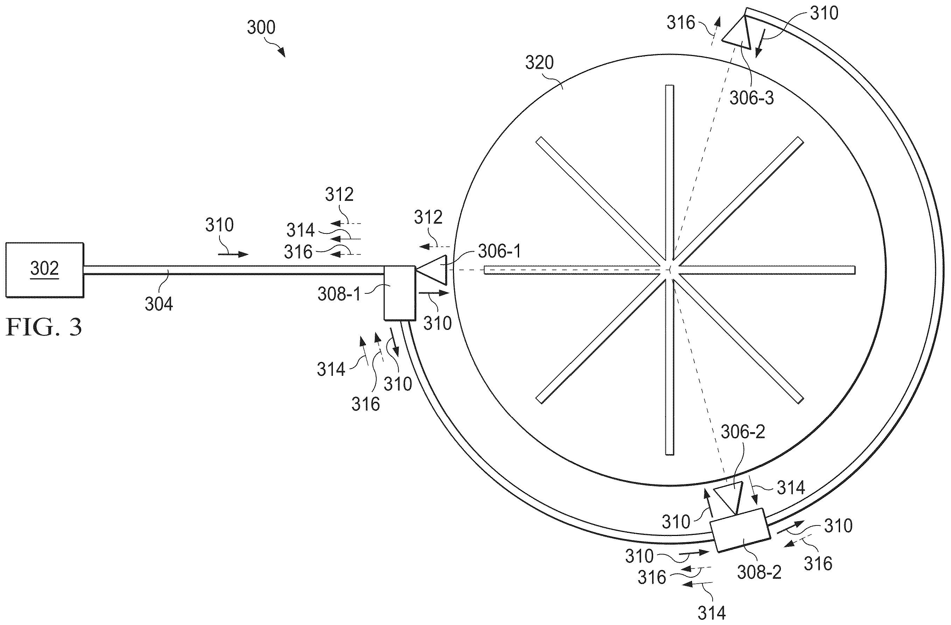

FIGURE 3 illustrates an example of time-based multiplexing for a microwave sensing apparatus 300 in accordance with this disclosure. In the example of FIGURE 3, microwave sensing apparatus 300 is substantially similar to microwave sensing apparatus 100 of FIGURE 1. However, for ease of explanation, microwave sensing apparatus 300 only includes three sensor interrogation points 306-1 through 306-3. It should be understood that microwave sensing apparatus 300 is not limited to the three sensor interrogation points 306-1 through 306-3, and that microwave sensing apparatus 300 may include additional sensor interrogation points or fewer sensor interrogation points. In the example of FIGURE 3, microwave sensing apparatus 300 is configured to monitor the blades of a gas turbine engine 320. However, it should be understood that microwave sensing apparatus 300 is not limited to blade monitoring applications, and that microwave sensing apparatus 300 may be configured for other application such as brake position monitoring, multidimensional flame monitoring of jet nozzles, etc.

To perform a measurement, transceiver unit 302 transmits an interrogation signal 310 comprising a "chirp" at a single frequency through waveguide 304 which reaches structure 308-1. Structure 308-1 operates as a coupler, and sensor interrogation point 306-1 emits the interrogation signal 310 to capture a return signal (or absence of a return signal) 312 from a blade of gas turbine engine 320. Return signal 312 travels back to transceiver unit 302 via waveguide 304 at a time proportional to the distance of sensor interrogation point 306-1 from transceiver unit 302. In some embodiments, structure 308-1 may function as, include, or be replaced by an RF reference point configured to facilitate the timing location within waveguide 304 associated with the location of sensor interrogation point 306-1.

Interrogation signal 310 continues down waveguide 304 and reaches structure 308-2. Structure 308-2 operates as a coupler, and sensor interrogation point 306-2 emits the interrogation signal 310 to capture a return signal (or absence of a return signal) 314 from a blade of gas turbine engine 320. Return signal 314 travels back to transceiver unit 302 via waveguide 304 at a time proportional to the distance of sensor interrogation point 306-2 from transceiver unit 302. Because sensor interrogation point 306-2 is further from transceiver unit 302 than sensor interrogation point 306-2, return signal 314 arrives at transceiver unit 302 at a later time than return signal 312. In some embodiments, structure 308-2 may function as, include, or be replaced by an RF reference point configured to facilitate the timing location within waveguide 304 associated with the location of sensor interrogation point 306-2.

Interrogation signal 310 continues down waveguide 304 and reaches sensor interrogation point 306-3 which emits the interrogation signal 310 to capture a return signal (or absence of a return signal) 316 from a blade of gas turbine engine 320. Return signal 316 travels back to transceiver unit 302 via waveguide 304 at a time proportional to the distance of sensor interrogation point 306-3 from transceiver unit 302. Because sensor interrogation point 306-3 is further from transceiver unit 302 than sensor interrogation points 306-1 and 306-2, return signal 316 arrives at transceiver unit 302 at a later time than return signals 312 and 314. In some embodiments, structure 308-3 may function as, include, or be replaced by an RF reference point configured to facilitate the timing location within waveguide 304 associated with the location of sensor interrogation point 306-3.

Because return signals 312, 314, and 316 arrive at transceiver unit 302 at different times proportional to the distances of sensor interrogation points 306-1 through 306-3, transceiver unit 302 is able to associate return signals 312, 314, and 316 with the respective sensor interrogation points of origin based on the time of arrival of return signals 312, 314, and 316 with respect to transmission of interrogation signal 310.

Although FIGURE 3 illustrates an example of frequency-based multiplexing for a microwave sensing apparatus 300, various changes could be made to FIGURE 3. For example, while microwave sensing apparatus 300 is depicted as having a particular size and shape, microwave sensing apparatus 300 may be of any size or shape. Similarly, while microwave sensing apparatus 300 is depicted as including a single transceiver unit 302 and a plurality of sensor interrogation points 306-1 through 306-3, microwave sensing apparatus 300 may include any number of transceiver units and sensor interrogation points.

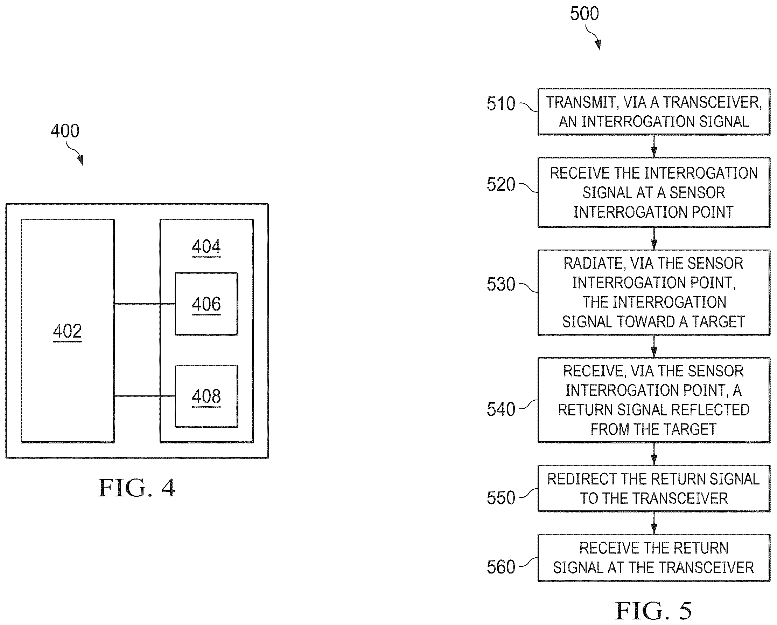

FIGURE 4 illustrates an example microwave sensing system 400 in accordance with this disclosure. In the example of FIGURE 4, system 400 is depicted as a block diagram that includes a controller 402 and a microwave sensing apparatus 404. Microwave sensing apparatus 404 is substantially similar to microwave sensing apparatus 100 of FIGURE 1, and may operate similarly as described regarding any of microwave sensing apparatus 100, microwave sensing apparatus 200 of FIGURE 2, or microwave sensing apparatus 300 of FIGURE 3.

Microwave sensing apparatus 404 includes a transceiver unit 406, a waveguide termination 408, and may include any number of sensor interrogation points (not shown) coupled to transceiver unit 406 via a waveguide (not shown) terminated by waveguide termination 408. Transceiver unit 406 and waveguide termination 408 are operatively coupled to controller 402.

Controller 402 may be configured to cause transceiver unit 406 to transmit at least one interrogation signal to perform at least one measurement, similar as described herein. Controller 402 may also be configured to receive data associated with the measurement from transceiver unit 406. In some embodiments, waveguide termination 408 may provide a system monitoring capability to controller 402. For example, controller 402 may monitor the health of microwave sensing apparatus 404 by analyzing the signal content reaching to the end of the waveguide structure. In some embodiments, controller 402 may be configured to interface with one or more of other controllers, devices, avionics, diagnostic equipment etc. to relay measurement data captured by microwave sensing apparatus 404.

Although FIGURE 4 illustrates an example microwave sensing system 400, various changes could be made to FIGURE 4. For example, while microwave sensing system 400 is depicted as including a single controller 402 and transceiver unit 406, microwave sensing system 400 may include any number of controllers and transceiver units. Furthermore, in some embodiments, microwave sensing system 400 may additional multiple microwave sensing apparatuses which may be controlled by controller 402 or another controller.

FIGURE 5 illustrates an example method 500 for operating a microwave sensing apparatus in accordance with this disclosure. For example, method 500 may be performed by any of microwave sensing apparatuses 100-404 of FIGURES 1-4.

Method 500 begins at step 510. At step 510, at least one transceiver (such as transceiver unit 102 of FIGURE 1) transmits via a waveguide at least one interrogation signal toward a plurality of sensor interrogation points (such as sensor interrogation points 106-1 through 106-N of FIGURE 1). In some embodiments, the at least one interrogation signal may be transmitted as part of a waveform comprising a plurality of interrogation signals, each interrogation signal transmitted on a unique frequency associated with one sensor interrogation point of the plurality of sensor interrogation points. In some embodiments, each sensor interrogation point of the plurality of sensor interrogation points may receive the at least one interrogation signal from the at least one transceiver via an identical frequency at different times. In some embodiments, step 510 may be initiated by a controller (such as controller 402 of FIGURE 4).

After step 510, each of the plurality of sensor interrogation points performs steps 520 through 550.

At step 520, the sensor interrogation point receives, via the waveguide, at least one of the at least one interrogation signal(s). In some embodiments, the sensor interrogation point may receive an interrogation signal of a plurality of interrogation signals transmitted on a unique frequency associated with the sensor.

At step 530, the sensor interrogation point radiates the received signal toward a target to perform at least one measurement. In some embodiments, the target may be a fan blade of a gas turbine engine. In some embodiments, the at least one measurement may be at least one of a blade tip time and a blade tip clearance.

At step 540, the sensor interrogation point receives a return signal redirected from the target corresponding with the at least one measurement.

At step 550, the sensor interrogation point redirects the return signal into the waveguide.

At step 560, the at least one transceiver receives, via the waveguide, the return signal redirected from each sensor interrogation point of the plurality of sensor interrogation points. In some embodiments, the at least one transceiver may associate the return signal redirected from a sensor interrogation point of the plurality of sensor interrogation points with that sensor interrogation point based on a receive frequency of the return signal. In some embodiments, the at least one transceiver may receive the return signal redirected from each sensor interrogation point of the plurality of sensor interrogation points at other different times. In some embodiment, the at least one transceiver may associate the return signal redirected from a sensor interrogation point of the plurality of sensor interrogation points with that sensor interrogation point based on an arrival time of the return signal with respect to a transmission time of the at least one interrogation signal.

In some embodiments, the transceiver may provide data associated with the measurement to a controller (such as controller 402 of FIGURE 4).

Although FIGURE 5 illustrates one example of a method 500 for operating a microwave sensing apparatus, various changes may be made to FIGURE 7. For example, while shown as a series of steps, various steps in FIGURE 7 could overlap, occur in parallel, occur in a different order, occur any number of times, be omitted, or be replaced by other steps.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate", as well as derivatives thereof, encompasses both direct and indirect communication. The terms "include" and "comprise", as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of" when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism", "module", "device", "unit", "component", "element", "member", "apparatus", "machine", "system", "processor", or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. An apparatus (100; 200; 300; 404) comprising:
a waveguide (104; 204; 304);
at least one transceiver (102; 204; 302; 406) configured to transmit and receive signals via the waveguide (104; 204; 304);
a plurality of sensor interrogation points (106; 206; 306), each sensor interrogation point (106; 206; 306) of the plurality of sensor interrogation points (106; 206; 306) configured to:
receive, via the waveguide (104; 204; 304), an interrogation signal (210; 201; 310) from the at least one transceiver (102...406);
radiate the interrogation signal (210; 201; 310) toward a target to perform at least one measurement;
receive a return signal (212, 214, 216; 312, 314, 316) reflected from the target corresponding with the at least one measurement; and
redirect the return signal (212...316) into the waveguide (104; 204; 304) for reception by the at least one transceiver (102...406) via the waveguide (104; 204; 304).

2. The apparatus (100...404) of claim 1, wherein:
the apparatus (100...404) is configured for integration within a gas turbine engine (120; 220; 320);
the target is a fan blade of the gas turbine engine (120; 220; 320); and
the at least one measurement is at least one of a blade tip time and a blade tip clearance.

3. The apparatus (100...404) of claim 1 or 2, wherein:
the transceiver (102...406) is configured to transmit the interrogation signal (210; 201; 310) as part of a waveform comprising a plurality of interrogation signals, each interrogation signal (210; 201; 310) transmitted on a unique frequency (f1; f3; f2) corresponding with one sensor interrogation point (106; 206; 306) of the plurality of sensor interrogation points (106; 206; 306); and
each sensor interrogation point (106; 206; 306) of the plurality of sensor interrogation points (106; 206; 306) is configured to receive an interrogation signal (210; 201; 310) of the plurality of interrogation signals transmitted on the unique frequency (f1; f3; f2) associated with the sensor.

4. The apparatus (100...404) of claim 3, wherein the transceiver (102...406) is configured to associate the return signal (212...316) redirected from a sensor interrogation point (106; 206; 306) of the plurality of sensor interrogation points (106; 206; 306) with that sensor interrogation point (106; 206; 306) based on a receive frequency (f1; f3; f2) of the return signal (212...316).

5. The apparatus (100...404) of claim 1 or 2, wherein:
each sensor of the plurality of sensor interrogation points (106; 206; 306) is configured to receive the interrogation signal (210; 201; 310) from the at least one transceiver (102...406) via an identical frequency at different times; and
the transceiver (102...406) is configured to receive the return signal (212...316) redirected from each sensor interrogation point (106; 206; 306) of the plurality of sensor interrogation points (106; 206; 306) at other different times.

6. The apparatus (100...404) of claim 5, wherein the transceiver (102...406) is configured to associate the return signal (212...316) redirected from a sensor interrogation point (106; 206; 306) of the plurality of sensor interrogation points (106; 206; 306) with that sensor interrogation point (106; 206; 306) based on an arrival time of the return signal (212...316) with respect to a transmission time of the interrogation signal (210; 201; 310).

7. The apparatus (100...404) of claim 5, wherein:
the waveguide (104; 204; 304) comprises at least one radio frequency (RF) reference point; and
the transceiver (102...406) is configured to associate the return signal (212...316) redirected from a sensor interrogation point (106; 206; 306) of the plurality of sensor interrogation points (106; 206; 306) with that sensor interrogation point (106; 206; 306) based on an arrival time of the return signal (212...316) at the transceiver (102...406) with respect to a departure time of the return signal (212...316) from the at least one RF reference point.

8. The apparatus (100...404) of any preceding claim, further comprising a waveguide termination (110; 408) coupled to an end of the waveguide (104; 204; 304) configured to at least one of:
terminate the waveguide (104; 204; 304) to prevent any end of waveguide reflection; and
provide an apparatus monitoring capability.

9. A method comprising:
transmitting, by at least one transceiver (102; 204; 302; 406) via a waveguide (104; 204; 304), at least one interrogation signal (210; 201; 310) toward a plurality of sensor interrogation points (106; 206; 306);
for each sensor interrogation point (106; 206; 306) of the plurality of sensor interrogation points (106; 206; 306):
receiving, via the waveguide (104; 204; 304), at least one of the at least one interrogation signal (210; 201; 310);
radiating the received signal toward a target to perform at least one measurement;
receiving a return signal (212, 214, 216; 312, 314, 316) reflected from the target corresponding with the at least one measurement; and
redirecting the return signal (212...316) into the waveguide (104; 204; 304); and
receiving, by the at least one transceiver (102...406) via the waveguide (104; 204; 304), the return signal (212...316) redirected from each sensor interrogation point (106; 206; 306) of the plurality of sensor interrogation points (106; 206; 306).

10. The method of claim 9, wherein:
the target is a fan blade of a gas turbine engine (120; 220; 320); and
the at least one measurement is at least one of a blade tip time and a blade tip clearance.

11. The method of claim 9 or 10, wherein:
the at least one interrogation signal (210; 201; 310) is transmitted as part of a waveform comprising a plurality of interrogation signals, each interrogation signal (210; 201; 310) transmitted on a unique frequency (f1; f3; f2) associated with one sensor interrogation point (106; 206; 306) of the plurality of sensor interrogation points (106; 206; 306); and
each sensor interrogation point (106; 206; 306) of the plurality of sensor interrogation points (106; 206; 306) receives an interrogation signal (210; 201; 310) of the plurality of interrogation signals transmitted on the unique frequency (f1; f3; f2) associated with the sensor.

12. The method of claim 11, further comprising associating the return signal (212...316) redirected from a sensor interrogation point (106; 206; 306) of the plurality of sensor interrogation points (106; 206; 306) with that sensor interrogation point (106; 206; 306) based on a receive frequency (f1; f3; f2) of the return signal (212...316).

13. The method of claim 9 or 10, wherein:
each sensor interrogation point (106; 206; 306) of the plurality of sensor interrogation points (106; 206; 306) receives the at least one interrogation signal (210; 201; 310) from the at least one transceiver (102...406) via an identical frequency at different times; and
the transceiver (102...406) receives the return signal (212...316) redirected from each sensor interrogation point (206; 206; 306) of the plurality of sensor interrogation points (106; 206; 306) at other different times.

14. The method of claim 13, further comprising associating the return signal (212...316) redirected from a sensor interrogation point (106; 206; 306) of the plurality of sensor interrogation points (106; 206; 306) with that sensor interrogation point (106; 206; 306) based on an arrival time of the return signal (212...316) with respect to a transmission time of the at least one interrogation signal (210; 201; 310).
